# EUROPÄISCHE PATENTSCHRIFT

(11) **EP 4 008 967 B1**
(45) Veröffentlichungstag und Bekanntmachung des Hinweises auf die Patenterteilung: **21.08.2024**
(21) Anmeldenummer: 21212507.4
(22) Anmeldetag: 06.12.2021
(51) Int. Cl.: F24C 15/32, F24C 7/08

(54) **GARGERÄT, INSBESONDERE GEWERBLICHES GARGERÄT**
COOKING DEVICE, IN PARTICULAR COMMERCIAL COOKING DEVICE
APPAREIL DE CUISSON, EN PARTICULIER APPAREIL DE CUISSON INDUSTRIEL

(30) Priorität: 07.12.2020 DE 102020132482
(43) Veröffentlichungstag der Anmeldung: 08.06.2022
(73) Patentinhaber: WELBILT Deutschland GmbH, 82436 Eglfing (DE)
(72) Erfinder: SMITS, Stan, 82362 Weilheim (DE)
(74) Vertreter: Hoefer & Partner Patentanwälte mbB

(56) Entgegenhaltungen:
- WO-A1-2013/008813
- WO-A1-2016/016860
- WO-A1-2021/209135
- DE-A1- 19 602 841
- FR-A1- 2 897 419
- GB-A- 2 241 615
- IT-A1- VI20 090 255
- TW-A- 201 223 487
- US-B1- 6 933 472

## Beschreibung

Die Erfindung betrifft ein Gargerät, insbesondere in Form eines gewerblichen Gargeräts, gemäß dem Oberbegriff des Anspruches 1.

Das gattungsgemäße Gargerät weist einen Garraum auf, in dem ein motorbetriebenes Lüfterrad angeordnet ist, das zwischen einer benachbarten Garraumwand und einer eine Ansaugöffnung aufweisenden Ansaugplatte angeordnet und damit vom Garraum getrennt ist.

Ferner ist eine Heizeinrichtung mit zwei oder mehr Heizspulen vorgesehen, die um das Lüfterrad herum angeordnet sind.

Für eine Dampferzeugung weist das gattungsgemäße Gargerät ferner eine Wasserzuführleitung auf, die in der Ansaugöffnung mündet.

Schließlich ist eine Gerätesteuerung für alle durchzuführenden Funktionen des Gargerätes vorgesehen.

Die Gerätesteuerung berücksichtigt jedoch zur Betätigung der Heizspulen der Heizeinrichtung lediglich die Garraumtemperatur, was einerseits die Effizienz der Dampferzeugung vermindert und andererseits in manchen Betriebsmodi zu einer starken Rauchentwicklung führt.

GB 2 241 615 A offenbart ein Gargerät gemäß dem Oberbegriff des Anspruchs 1. IT VI20 090 255 A1 offenbart ein Gargerät mit mehreren Heizspulen, die einzeln aktiviert werden können.

Es ist daher Aufgabe der vorliegenden Erfindung, ein Gargerät, insbesondere ein gewerbliches Gargerät, gemäß dem Oberbegriff des Anspruchs 1 zu schaffen, das es möglich macht, die Effizienz der Dampferzeugung zu steigern und eine unerwünschte Rauchentwicklung zumindest zu minimieren.

Die Lösung dieser Aufgabe erfolgt durch die Merkmale des Anspruches 1.

Im Rahmen der Erfindung durchgeführte Untersuchungen und Tests haben ergeben, dass das Lüfterrad von Gargeräten, insbesondere von Kombi-Dämpfern, als Zentrifugalfilter aufgefasst werden kann. Demgemäß tendieren schwere Partikel dazu, sich einer Garraumwand, die benachbart zum Lüfterrad angeordnet ist, zu nähern, während die Luft selber nahe der Ansaugplatte strömt. Bauartbedingt kann dies jedoch auch genau umgekehrt sein.

Dementsprechend ist erfindungsgemäß vorgesehen, dass die Gerätesteuerung die Heizspulen der Heizeinrichtung unabhängig voneinander aktiviert, um für den Fall der Dampferzeugung die Heizspule bzw. Heizspulen zu aktivieren, die nahe der, dem Lüfterrad benachbarten, Garraumwand angeordnet sind, während für Garmodi, die insbesondere mit Heißluft garen, die Heizspule aktiviert ist, die nahe dem Garraum bzw. der Ansaugplatte angeordnet ist. Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung der Figuren der Zeichnung. Darin zeigt:
- Fig. 1: eine schematisch stark vereinfachte Prinzipdarstellung eines erfindungsgemäßen Gargeräts in einem Betriebsmodus für Dampferzeugung,
- Fig. 2: eine der Fig. 1 entsprechende Darstellung des erfindungsgemäßen Gargeräts im Betriebsmodus für ein Garen mit Heißluft,
- Fig. 3: ein Blockschaltbild zur Erläuterung der Einflussparameter, die eine Gerätesteuerung des erfindungsgemäßen Gargeräts berücksichtigt,
- Fig. 4: eine schematisch stark vereinfachte Teildarstellung des erfindungsgemäßen Gargeräts zur Erläuterung einer zweiten Ausführungsform, und
- Fig. 5: eine der Fig. 4 entsprechende Darstellung des erfindungsgemäßen Gargeräts zur Erläuterung einer dritten Ausführungsform.

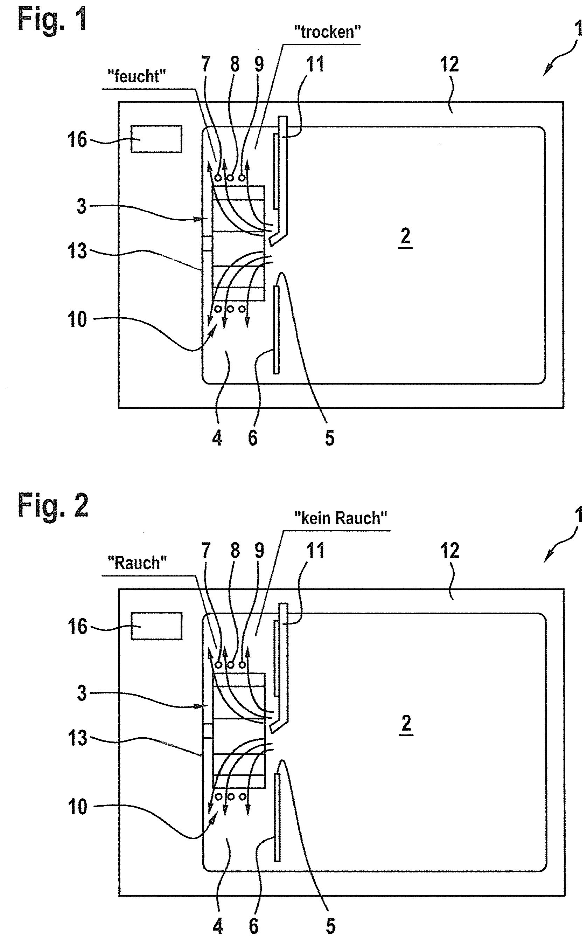

In den Figuren 1 und 2 ist ein erfindungsgemäßes Gargerät 1 dargestellt, das insbesondere als gewerbliches Gargerät ausgebildet sein kann.

Bevor im Einzelnen auf die Prinzipien der vorliegenden Erfindung eingegangen wird, sei betont, dass im Rahmen dieser Anmeldung unter dem Begriff "Gargerät" sowohl gewerbliche Gargeräte wie auch Haushalts-Gargeräte und insgesamt ganz allgemein Nahrungsmittel-Behandlungs-Geräte verstanden werden, die sowohl eine kalte wie auch eine heiße Behandlung von Nahrungsmitteln durchführen können und beispielsweise Heißluftdämpfer, Kombi-Dämpfer und andere Nahrungsmittel-Behandlungs-Geräte umfassen können.

Das erfindungsgemäße Gargerät 1 weist einen in einem Gehäuse 12 angeordneten Garraum, auf.

Ferner ist ein motorbetriebenes Lüfterrad 3 dargestellt, das in einem Bereich 4 angeordnet ist, der mittels einer, eine zentrische Ansaugöffnung 5 aufweisenden Ansaugplatte 6 vom Garraum 2 getrennt ist. Hieraus ergibt sich, dass das Lüfterrad 3 zwischen einer benachbarten Garraumwand 13 und der Ansaugplatte 6 im Bereich 4 angeordnet ist.

Ferner weist das Gargerät 1 eine Heizeinrichtung 10 auf, die zumindest zwei, im dargestellten Fall drei, Heizspulen 7, 8, 9, aufweist, die um das Lüfterrad 3 herum angeordnet sind.

Ferner ist eine optionale Wasserzuführleitung 11 vorgesehen, die im dargestellten Beispielsfall für den Fall einer Dampferzeugung aktiviert wird und die in der Ansaugöffnung 5 der Ansaugplatte 6 mündet.

Schließlich weist das Gargerät 1 eine Gerätesteuerung / Geräteregelung 16 auf, die die Heizspulen 7, 8, 9 unabhängig voneinander aktiviert.

Für diese Aktivierung kann die Gerätesteuerung 16 die Heizspulen 7, 8, 9 unter Berücksichtigung einer Mehrzahl von einen Garvorgang beeinflussenden Parametern P1 bis P5 aktivieren.

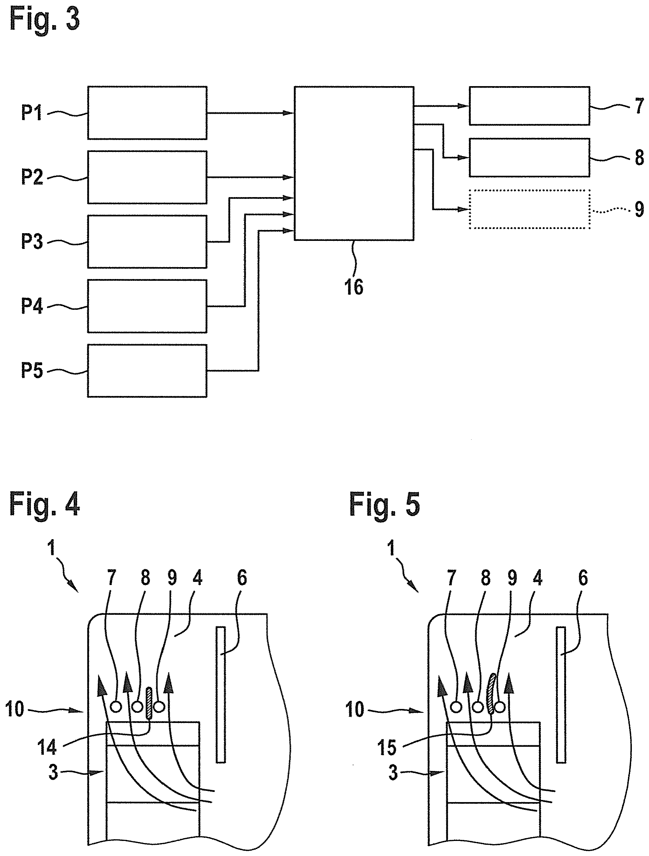

Gemäß Fig. 3 können diese Parameter eine im Garraum herrschende Garraumtemperatur, eine eingestellte zu erreichende Garraumtemperatur, unterschiedliche Garmodi, insbesondere solche, die ohne Rauchentwicklung oder zumindest nur mit minimaler Rauchentwicklung durchgeführt werden sollen.

Ferner kann als Parameter (P1 bis P5) das jeweils ausgewählte Gargut und weitere Garparameter, wie insbesondere das Feuchtigkeitsniveau, die Lüfterraddrehzahl und weitere über Sensoren ermittelbare Parameter und von Aktuatoren abhängige Parameter berücksichtigt werden.

Fig. 3 verdeutlicht hierbei eine Einstellung, bei der die Heizspulen 7 und 8 aktiviert sind, die Heizspule 9 jedoch nicht, was durch den gepünktelten Block 9 symbolisiert ist.

Die Heizspulen 7 und 8 liegen gemäß Fig. 1 in einem "feuchten" Teilbereich des Bereiches 4, da, wie eingangs erläutert wird, die durch das Lüfterrad 3 hervorgerufene zentrifugale Trennung von Partikeln in diesem "feuchten" Teilbereich Wasserpartikel mit der Luftströmung transportiert werden, so dass bei Betätigung der Heizspulen 7 und 8 die Dampferzeugung optimierbar ist.

Bei der Darstellung des Gargeräts 1 gemäß Fig. 2 ist der Teilbereich, der den Heizspulen 7 und 8 zugeordnet ist, der "Rauch"-Teilbereich, da in diesem Fall das Gargerät 1 in einem Konvektionsmodus (Heißluftgaren) betrieben wird, bei dem Fettpartikel aufgrund der Zentrifugalwirkung des Lüfterrades 3 in den Bereich "Rauch" transportiert werden, wohingegen im Teilbereich "kein Rauch" des Bereiches 4, in dem die Heizspule 9 angeordnet ist, eine derartige Rauchentwicklung, wenn überhaupt, nur gering ist. Aus diesem Grunde wird für diesen Betriebsmodus nur die Heizspule 9 aktiviert, während die Heizspulen 7 und 8 außer Betrieb sind.

Die zweite Ausführungsform des Gargeräts 1 gemäß der Teildarstellung der Fig. 4 verdeutlicht das Vorsehen einer ringförmigen Trennwand 14, die im Beispielsfalle zwischen den Heizspulen 7, 8 einerseits und 9 andererseits in oder an der Heizeinrichtung 10 angeordnet ist.

Bei der Ausführungsform gemäß Fig. 5 ist ebenfalls eine derartige ringförmige Trennplatte 15 vorgesehen, die jedoch gekrümmt ausgebildet ist.

Vom Prinzip her ist es auch möglich, zwei derartige Trennplatten vorzusehen, wobei eine Trennplatte zwischen den Heizspulen 7 und 8 und die andere, wie dargestellt, zwischen den Heizspulen 8 und 9 vorgesehen werden würde.

### Bezugszeichenliste

- 1: Gargerät, insbesondere gewerbliches Gargerät
- 2: Garraum
- 3: motorbetriebenes Lüfterrad
- 4: Bereich zwischen einer Garraumwand 13 und einer Ansaugplatte 6
- 5: Ansaugöffnung
- 6: Ansaugplatte
- 7, 8, 9: Heizspulen
- 10: Heizeinrichtung
- 11: Wasserzuführleitung
- 12: Gehäuse
- 13: Garraumwand benachbart zum Lüfterrad 3
- 14, 15: ringförmige Trennwände
- 16: Gerätesteuerung/Geräteregelung
- P1 bis P5: Parameter

## Patentansprüche

1. Gargerät (1), insbesondere gewerbliches Gargerät
- mit einem Garraum (2);
- mit einem motorbetriebenen Lüfterrad (3), das in einem Bereich (4) angeordnet ist, der mittels einer, eine zentrische Ansaugöffnung (5) aufweisenden, Ansaugplatte (6) vom Garraum (2) getrennt ist;
- wobei das Lüfterrad (3) als Zentrifugalfilter aufgefasst wird, demgemäß schwere Partikel dazu tendieren, sich einer Garraumwand (13), die benachbart zum Lüfterrad (3) angeordnet ist, zu nähern, während Luft selber nahe der Ansaugplatte (5) strömt, oder dies gargeräte-bauartbedingt genau umgekehrt ist,
- mit einer, zumindest zwei, Heizspulen (7, 8, 9) aufweisenden Heizeinrichtung (10), die um das Lüfterrad (3) herum angeordnet ist; und
- mit einer Gerätesteuerung (16),
**dadurch gekennzeichnet,**
- **dass** die Gerätesteuerung (16) die Heizspulen (7, 8, 9) unabhängig voneinander aktiviert- und die Gerätesteuerung (16) für eine optimierte Dampferzeugung, je nach Gargeräte-Bauart, die Heizspule (7) bzw. die Heizspulen (7, 8) aktiviert, die nahe der Garraumwand (13) angeordnet ist/sind, die benachbart zum Lüfterrad (3) angeordnet ist, und wobei die Heizspule (9) nicht aktiviert ist,
- und die Gerätesteuerung (16) für eine optimierte Rauchverminderung je nach Gargeräte-Bauart, die Heizspule bzw. Heizspulen (9) aktiviert, die benachbart zu dem Garraum (2) angeordnet ist/sind, und wobei die Heizspulen (7,8) nicht aktiviert sind.

2. Gargerät nach Anspruch 1, **dadurch gekennzeichnet, dass** die Gerätesteuerung (16) die Heizspulen (7, 8, 9) unter Berücksichtigung einer Mehrzahl von einen Garvorgang beeinflussenden Parametern (P1 bis P5) aktiviert,
wobei die Gerätesteuerung (16) folgende Parameter (P1 bis P5) berücksichtigt:
- im Garraum herrschende Garraumtemparatur
- eingestellte Garraumtemperatur
- Garmodus, insbesondere ohne Rauch
- ausgewähltes Gargut
- weitere Garparameter, insbesondere Feuchtigkeitsniveau und Lüfterraddrehzahl.

3. Gargerät nach einem der Ansprüche 1 bis 2, **dadurch gekennzeichnet, dass** zumindestens eine ringförmige Trennplatte (14, 15) oder Separator-Teilsegmente zwischen den Heizspulen (7, 8, 9) in oder nahe der Heizeinrichtung (10) vorgesehen ist.

4. Gargerät nach Anspruch 3, **dadurch gekennzeichnet, dass** die Trennplatte (15) gekrümmt ausgebildet ist.

5. Gargerät nach einem der Ansprüche 1 bis 4, **gekennzeichnet durch** eine Wasserzuführleitung (16), die in der Ansaugöffnung (5) mündet.

## Claims

1. A cooking device (1), in particular commercial cooking device
- with a cooking chamber (2);
- with a motor-driven fan wheel (3), which is arranged in a region (4), which is separated from the cooking chamber (2) by means of a suction plate (6) comprising a central suction opening (5);
- wherein the fan wheel (3) is considered to be centrifugal filter, according to which heavy particles tend to approach a cooking chamber wall (13), which is arranged adjacent to the fan wheel (3), while air itself flows close to the intake plate (5), or this is exactly reversed due to the design of the cooking device,
- with a heating device (10) comprising at least two heating coils (7, 8, 9), which is arranged around the fan wheel (3); and
- with a device controller (16),
**characterised in**
- **that** the device controller (16) activates the heating coils (7, 8, 9) independently of one another - and the device controller (16) activates the heating coil (7) or the heating coils (7, 8) arranged close to the cooking chamber wall (13), which is arranged adjacent to the fan wheel (3), for an optimised steam generation, depending on cooking device design, and wherein the heating coil (9) is not activated,
- and **that** the device controller (16) activates the heating coil or heating coils (9) arranged adjacent to the cooking chamber (2) for an optimised smoke reduction, depending on cooking device design, and wherein the heating coils (7, 8) are not activated.

2. The cooking device according to claim 1, **characterised in that** the device controller (16) activates the heating coils (7, 8, 9) under consideration of a plurality of parameters (P1 to P5) influencing a cooking process,
wherein the device controller (16) takes into account following parameters (P1 to P5):
- cooking chamber temperature prevailing in the cooking chamber
- set cooking chamber temperature
- cooking mode, in particular without smoke
- selected food
- further cooking parameters, in particular humidity level and fan wheel speed.

3. The cooking device according to one of claims 1 to 2, **characterised in that** at least one annular separating plate (14, 15) or separator sub-segments are provided between the heating coils (7, 8, 9) in or near the heating device (10).

4. The cooking device according to claim 3, **characterised in that** the separating plate (15) is formed curved.

5. The cooking device according to one of claims 1 to 4, **characterised by** a water supply line (16), which opens into the suction opening (5).

## Revendications

1. Appareil de cuisson (1), en particulier appareil de cuisson industriel
- avec un espace de cuisson (2) ;
- avec une roue de ventilateur (3) motorisée qui est agencée dans une zone (4) qui est séparée de l'espace de cuisson (2) au moyen d'une plaque d'aspiration (6) présentant une ouverture d'aspiration (5) centrale ;
- dans lequel la roue de ventilateur (3) est détectée en tant que filtre centrifuge, en conséquence des particules lourdes tendent à s'approcher d'une paroi de l'espace de cuisson (13) qui est agencée de manière contiguë à la roue de ventilateur (3), alors que l'air lui-même circule près de la plaque d'aspiration (5), ou cela est exactement inversé selon le type d'appareil de cuisson,
- avec un dispositif de chauffage (10) présentant au moins deux bobines de chauffage (7, 8, 9) qui est agencé autour de la roue de ventilateur (3) ; et
- avec une commande d'appareil (16),
**caractérisé en ce que**
- la commande d'appareil (16) active les bobines de chauffage (7, 8, 9) indépendamment les unes des autres et la commande d'appareil (16) active pour une génération de vapeur optimisée, selon le type d'appareil de cuisson, la bobine de chauffage (7) ou les bobines de chauffage (7, 8) qui est/sont agencée(s) près de la paroi de l'espace de cuisson (13) qui est agencée de manière contiguë à la roue de ventilateur (3), et dans lequel la bobine de chauffage (9) n'est pas activée,
- et la commande d'appareil (16) active pour une diminution de fumées optimisée selon le type d'appareil de cuisson la bobine de chauffage ou les bobines de chauffage (9) qui est/sont agencée(s) de manière contiguë à l'espace de cuisson (2), et dans lequel les bobines de chauffage (7, 8) ne sont pas activées.

2. Appareil de cuisson selon la revendication 1, **caractérisé en ce que** la commande d'appareil (16) active les bobines de chauffage (7, 8, 9) en tenant compte d'une pluralité de paramètres (P1 à P5) influençant un processus de cuisson,
dans lequel la commande d'appareil (16) tient compte des paramètres suivants (P1 à P5) :
- la température de l'espace de cuisson régnant dans l'espace de cuisson
- la température de l'espace de cuisson réglée
- le mode de cuisson, en particulier sans fumée
- le produit à cuire sélectionné
- d'autres paramètres de cuisson, en particulier le niveau d'humidité et la vitesse de rotation de roue de ventilateur.

3. Appareil de cuisson selon l'une quelconque des revendications 1 et 2, **caractérisé en ce qu'**au moins une plaque de séparation (14, 15) annulaire ou des segments partiels de séparateur entre les bobines de chauffage (7, 8, 9) est prévue ou sont prévus dans ou près du dispositif de chauffage (10).

4. Appareil de cuisson selon la revendication 3, **caractérisé en ce que** la plaque de séparation (15) est réalisée de manière incurvée.

5. Appareil de cuisson selon l'une quelconque des revendications 1 à 4, **caractérisé par** une conduite d'alimentation en eau (16) qui débouche dans l'ouverture d'aspiration (5).
